# EUROPÄISCHE PATENTSCHRIFT

(11) **EP 4 028 736 B1**
(45) Veröffentlichungstag und Bekanntmachung des Hinweises auf die Patenterteilung: **26.03.2025**
(21) Anmeldenummer: 20760826.6
(22) Anmeldetag: 20.08.2020
(51) Int. Cl.: G01K 1/143, G01K 13/02, G01K 1/16

(54) **THERMOMETER**
THERMOMETER
THERMOMÈTRE

(30) Priorität: 12.09.2019 DE 102019124606
(43) Veröffentlichungstag der Anmeldung: 20.07.2022
(73) Patentinhaber: Endress+Hauser Wetzer GmbH+Co. KG, 87484 Nesselwang (DE)
(72) Erfinder: KOCH, Daniel, 87466 Oy-Mittelberg (DE); SCHALLES, Marc, 99097 Erfurt (DE); BRÜNDL, Harald, 85247 Schwabhausen (DE); WIEDEMANN, Stephan, 87544 Bihlerdorf (DE); WIEDEMANN, Peter, 87480 Weitnau (DE); ISELT, Torsten, 87435 Kempten (DE); PEUKER, Christian, 87484 Nesselwang (DE); VRDOLJAK, Pavo, 87484 Nesselwang (DE); WOLF, Georg, 87616 Marktoberdorf (DE); KALLWEIT, Christian, 87700 Memmingen (DE); MORNHINWEG, Markus, 86911 Dießen (DE); UMKEHRER, Alfred, 87659 Hopferau (DE)
(74) Vertreter: Endress + Hauser Group Services (Deutschland) AG+Co. KG
(86) Internationale Anmeldenummer: PCT/EP2020/073391
(87) Internationale Veröffentlichungsnummer: WO 2021/047883

(56) Entgegenhaltungen:
- CH-A5- 647 867
- US-A1- 2015 068 281

## Beschreibung

Die Erfindung betrifft ein Thermometer zur Bestimmung und/oder Überwachung der Temperatur eines Mediums in der Automatisierungstechnik, sowie ein Verfahren zur Herstellung einer erfindungsgemäßen Vorrichtung.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials oder eine davon abgeleitete Größe mit der Temperatur in Zusammenhang bringen, wie beispielsweise den elektrischen Widerstand bei Verwendung von Widerstandselementen oder den thermoelektrischen Effekt im Falle von Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines Widerstandselements sind unter anderem sogenannte Dünnschicht- und Dickschicht-Sensoren sowie sogenannte Heißleiter (auch als NTC-Thermistoren bezeichnet) bekannt geworden. Bei einem Dünnschicht-Sensor, insbesondere einem Resistance Temperature Detector (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich. Die Temperatursensoren sind häufig Teil eines Messeinsatzes, welcher beispielsweise in ein in das Medium eintauchenden Eintauchkörper, bzw. ein Schutzrohr, eingebracht wird. Diesbezüglich wird auf CH 647 867 A5 verwiesen. Ähnliche Ausgestaltungen von Thermometern sind aber auch im Falle einer nicht-invasiven Temperaturmessung bekannt geworden. In diesem Falle kommt der jeweilige Temperatursensor über die Wandung des jeweiligen Behältnisses, in welchem sich das Medium befindet, mit dem Medium in Kontakt und wird an der Wandung des Behältnisses geeignet befestigt.

Für eine zuverlässige Temperaturbestimmung ist es wichtig, dass der jeweilige Temperatursensor und das Medium sich zumindest für eine bestimmte Zeit, welche zur Erfassung der Temperatur erforderlich ist, im Wesentlichen im thermischen Gleichgewicht befinden. Die Zeit für eine Reaktion eines Thermometers auf eine Temperaturänderung wird auch als Ansprechzeit des Thermometers bezeichnet.

Die Messgenauigkeit eines Thermometers hängt dabei empfindlich von den jeweiligen thermischen Kontakten und der jeweils vorherrschenden Wärmeleitung ab. Insbesondere die Wärmeströme zwischen dem Medium, dem Behältnis, in welchem sich das Mediums befindet, den Komponenten des Thermometers und der Prozessumgebung spielen hier eine entscheidende Rolle. Im Falle der invasiven Temperaturmessung mittels eines Eintauchkörpers spielt eine Wärmeableitung an die Umgebung beispielsweise mit abnehmender Länge des Eintauchkörpers eine steigende Rolle. Die Wärme aus dem Prozess gelangt über das Schutzrohr nicht nur zum Temperatursensor, sondern auch an die Umgebung. Bei der nicht-invasiven Temperaturmessung ist der Einfluss dieser ungewollten Wärmeableitung an die Umgebung sogar noch größer, da der Temperatursensor hier nicht direkt von dem Medium umgeben ist.

Daher liegt der Erfindung die Aufgabe zugrunde, die Messgenauigkeit von Thermometern zu verbessern.

Diese Aufgabe wird gelöst durch die Vorrichtung nach Anspruch 1. Die erfindungsgemäße Vorrichtung zur Bestimmung und/oder Überwachung einer Temperatur eines Mediums in einem Behältnis, insbesondere einem Behälter oder einer Rohrleitung, umfasst einen Messeinsatz mit einem Temperatursensor zur Erfassung der Temperatur und ein Schutzrohr, in welchem der Temperatursensor angeordnet ist. Darüber hinaus umfasst die Vorrichtung ein wärmeleitfähiges Formstück, welches in dem Schutzrohr angeordnet ist, und den Messeinsatz zumindest abschnittsweise, insbesondere auch in einem dem Medium abzuwendenden Bereich des Temperatursensors, umgibt.

Das Formstück dient der Wärmeleitung vom Prozess zum Temperatursensor bzw. der Wärmeverteilung innerhalb des Thermometers. Insbesondere dient das Formstück dazu, eine im Wesentlichen homogene Temperaturverteilung in einem den Temperatursensor umgebenden, vorgebbaren Volumen zu gewährleisten. Auf diese Weise tritt im Bereich des Temperatursensors vorteilhaft ein deutlich reduzierter Temperaturgradient aufgrund einer Wärmableitung an die Umgebung auf. Ein den Temperatursensor umgebender Bereich wird vielmehr im Wesentlichen gleichmäßig erwärmt. Im Vergleich zu eine Wärmeleitpaste gewährleistet das erfindungsgemäße Formstück vorteilhaft einen reproduzierbaren, im Wesentlichen zeitlich konstanten, thermischen Kontakt.

Je nach Ausgestaltung des Thermometers ist das Formstück so ausgestaltet, dass es den Temperatursensor zumindest teilweise umgibt und in thermischem Kontakt mit zumindest einer weiteren Komponente des Thermometers, insbesondere des Schutzrohrs ist. Dabei ist für die Verminderung der Wärmableitung insbesondere auch ein dem Prozess abgewandter Bereich um den Temperatursensor herum relevant.

Vorteilhaft kann das erfindungsgemäße Formstück auch zur Nachrüstung bestehender Thermometer genutzt werden

In einer vorteilhaften Ausgestaltung ist das Formstück aus Kupfer, Silber, Graphit, Bornitrid, einem Stahl, insbesondere Edelstahl, oder einer zumindest eines dieser Materialien aufweisenden Legierung hergestellt.

Erfindungsgemäß ist das Formstück zumindest abschnittsweise rohrförmig, insbesondere zylindrisch, ausgestaltet. In dem rohrförmigen Bereich ist das Formstück dann um den Messeinsatz herum in dem Schutzrohr angeordnet, befindet sich also zwischen dem Messeinsatz und dem Schutzrohr.

Eine weitere bevorzugte Ausgestaltung beinhaltet, dass das Formstück becherförmig ausgestaltet ist. Das Formstück weist somit einen rohrförmigen Abschnitt und eine Bodenfläche auf. Eine derartige Ausgestaltung eignet sich beispielsweise für den Fall eines nicht-invasiven Thermometers. Hier wird der Messeinsatz in das becherförmige Formstück eingebracht.

In einer anderen Ausgestaltung mit einem becherförmigen Formstück weist die Bodenfläche des Formstücks eine Bohrung auf, durch welche der Messeinsatz führbar ist. Eine solche Ausgestaltung wiederum eignet sich beispielsweise für den Fall einer invasiven Temperaturbestimmung. Die Bodenfläche ist insbesondere auf der dem Medium abzuwendenden Seite des Temperatursensors angeordnet. Die Bodenfläche dient damit im Prinzip als Deckel und grenzt ein den Temperatursensor umgebendes Volumen gegen die Umgebung ab. Eine solche Ausgestaltung kann aber gleichermaßen in Zusammenhang mit einem nicht-invasiven Thermometer realisiert werden.

In einer besonders bevorzugten Ausgestaltung der Erfindung weist das Formstück zumindest abschnittsweise eine zu einer Geometrie des Schutzrohres und/oder der Messeinsatzes korrespondierende Geometrie auf. Insbesondere ist die Geometrie des Formstücks zumindest abschnittsweise an die Geometrie des Schutzrohrs in dem Bereich, in welchen das Formstück in das Schutzrohr einsetzbar ist, an diejenige des Schutzrohrs bzw. in dem Bereich, in welchem das Formstück den Messeinsatz umgibt, an diejenige des Messeinsatzes angepasst. Durch diese Maßnahme kann das Formstück zumindest abschnittsweise passgenau in das Schutzrohr eingebracht werden. Hierdurch wird der jeweilige thermische Kontakt zwischen dem Formstück und dem Schutzrohr bzw. dem Messeinsatz verbessert.

In noch einer Ausgestaltung weist das Formstück ein Endstück auf, dessen Außendurchmesser größer ist als ein Außendurchmesser des Formstücks in einem mittleren Bereich des Formstücks. Eine derartige Ausgestaltung ist insbesondere vorteilhaft für Schutzrohre mit variablem Innendurchmesser, insbesondere für solche Schutzrohre, bei welchen der Innendurchmesser des Schutzrohrs in einem ersten Bereich, in welchem der Temperatursensor anordenbar ist, geringer ist als in einem zweiten Bereich, welcher dem Prozess abgewandt ist. In diesem Fall ist das Endstück insbesondere in dem zweiten Bereich angeordnet und verschließt zumindest teilweise den ersten Bereich gegenüber der Umgebung.

In dieser Hinsicht ist es von Vorteil, wenn das Endstück scheibenförmig ausgestaltet ist. Je nach Ausgestaltung des Thermometers ist es weiterhin von Vorteil, wenn das Endstück eine Bohrung aufweist, durch die der Messeinsatz führbar ist.

Es ist außerdem von Vorteil, wenn eine Geometrie des Endstücks zumindest teilweise korrespondierend zu einer Geometrie des Schutzrohres in einem Bereich, in welchen das Formstück einbringbar ist, ausgestaltet ist. Für ein Schutzrohr mit einem ersten und zweiten Bereich mit unterschiedlichen Durchmessern ist die Geometrie des Formstücks insbesondere an die Geometrie des Schutzrohrs in einem Übergangsbereich zwischen dem ersten und zweiten Bereich angepasst.

Erfindungsgemäß umfasst die Vorrichtung außerdem Befestigungsmittel zur lösbaren Befestigung des Formstücks in dem Schutzrohr und an dem Messeinsatz. Das Befestigungsmittel dient der Verbesserung des thermischen Kontakts zwischen dem Formstück und dem Schutzrohr und/oder dem Formstück und dem Messeinsatz.

Es ist von Vorteil, wenn die Befestigungsmittel derart ausgestaltet und angeordnet sind, dass mittels der Befestigungsmittel eine, insbesondere vorgebbare, Anpresskraft auf das Formstück ausübbar ist. Zur Ausübung der Anpresskraft bzw. zum Ausüben eines vorgebbaren Anpressdrucks auf das Formteil können die Befestigungsmittel beispielsweise in einer Ausgestaltung derart beschaffen sein, dass eine Federkraft des Messeinsatzes selbst zu Hilfe genommen wird.

In anderen Ausgestaltungen können die Befestigungsmittel beispielsweise eine Feder, einen Schraubverschluss oder einen Bajonette-Verschluss umfassen. Hinsichtlich des Befestigungsmittel sind grundsätzlich alle dem Fachmann bekannten Arten und Weisen zur geeigneten Befestigung des Formstücks in dem Schutzrohr und/oder an dem Messeinsatz denkbar und fallen unter die vorliegende Erfindung.

Erfindungsgemäß weisen die Befestigungsmittel zumindest einen, insbesondere zylindrischen, Grundkörper auf, welcher um das Formstück herum in dem Schutzrohr angeordnet ist. Der Grundkörper kann beispielsweise dazu dienen, eine vorgebbare Anpresskraft auf das Formstück zu übertragen.

Darüber hinaus kann der Grundkörper in einer Ausgestaltung der Erfindung aus einem wärmeisolierenden Material hergestellt sein. In diesem Falle bietet der Grundkörper ferner eine Isolierung gegenüber der Umgebung. Während das Formstück für eine homogene Wärmeverteilung in der Umgebung des Temperatursensor sorgt, dient der Grundkörper dann als zusätzliche Wärmeisolierung gegenüber der Umgebung.

So ist es von Vorteil, wenn der Grundkörper aus einem Kunststoff, insbesondere PEEK, PEK, oder PPS gefertigt ist.

In einer anderen Ausgestaltung kann der Grundkörper aber auch aus einem wärmeleitfähigen Material gefertigt sein. In diesem Falle kann beispielsweise eine geringe Wanddicke für den Grundkörper oder eine geschickte Geometrie für den Grundkörper gewählt werden, um auch in diesem Falle eine Abschirmung des Formstücks gegenüber der Umgebung zu erreichen.

Eine weitere Ausgestaltung beinhaltet, dass die Befestigungsmittel zumindest eine Feder aufweisen, durch welche Feder die vorgebbare Anpresskraft vermittels des Grundkörpers vermittelbar ist. Die Feder umgibt zumindest in einem Abschnitt den Grundkörper. Der Grundkörper ist für die Kraftvermittlung passend ausgestaltet. Beispielsweise weist der Grundkörper in einem äußeren Bereich einen Absatz auf, auf welchem die Feder anordenbar ist.

Schließlich beinhaltet eine weitere Ausgestaltung der Erfindung, dass der Temperatursensor zumindest ein Widerstandselement oder ein Thermoelement umfasst.

Anhand der nachfolgenden Figuren wird die Erfindung näher erläutert. Es zeigt:
Fig. 1: ein Thermometer zur invasiven Temperaturmessung mit einem Schutzrohr nach Stand der Technik;
Fig. 2: ein Thermometer zur nicht-invasiven Temperaturmessung nach Stand der Technik;
Fig. 3: eine erste Ausgestaltung für ein erfindungsgemäßes Thermometer zur nicht-invasiven Temperaturbestimmung mit einem erfindungsgemäßen Formstück;
Fig. 4: beispielhafte Ausgestaltungen für ein erfindungsgemäßes Formstück;
Fig. 5: eine zweite Ausgestaltung für ein erfindungsgemäßes Thermometer zur invasiven Temperaturbestimmung mit einem erfindungsgemäßen Formstück; und
Fig. 6: ein erfindungsgemäßes Formstück mit einer möglichen Ausgestaltung für die Befestigungsmittel.

In den Figuren sind gleiche Elemente jeweils mit demselben Bezugszeichen versehen.

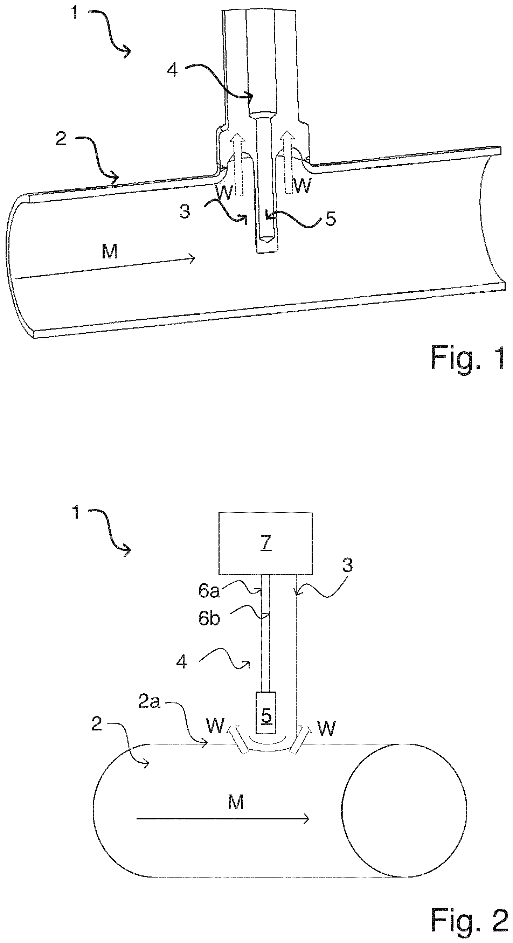

In Fig.1 ist eine schematische Abbildung eines Thermometers 1 gemäß Stand der Technik zur Erfassung der Temperatur T einer von einem Medium M durchflossenen Rohrleitung 2 dargestellt. Das Thermometer 1 wird mittels eines Schutzrohrs 3 in die Rohrleitung 2 eingebracht. Der Temperatursensor 5 ist Teil eines Messeinsatzes 4, welcher in das Schutzrohr 3 lösbar einbringbar ist. Bei einer derartigen Anordnung hängt die erzielbare Messgenauigkeit unter anderem von der jeweiligen Wärmeableitung W an die Prozessumgebung ab. Die unerwünschte Wärmeableitung wächst mit sinkender Eintauchtiefe des Schutzrohrs 3 in die Rohrleitung 2, so dass gerade für Rohrleitungen 2 mit geringem Durchmesser mit einem erhöhten Messfehler zu rechnen ist.

Eine vergleichbare Problematik ergibt sich auch für den Fall einer nicht-invasiven Temperaturbestimmung, wie in Fig. 2 illustriert. Hier ragt das Thermometer 1 nicht in die Rohrleitung 2 hinein, sondern ist vielmehr von außen auf eine Wandung 2a der Rohrleitung 2 aufgesetzt. Auch hier umfasst der Messeinsatz 3 einen Temperatursensor 5. Für das Thermometer 1 aus Fig. 2 sind ferner Anschlussleitungen 6a, 6b dargestellt, mittels welcher der Temperatursensor 5 mit einer Elektronik 7 verbindbar ist. Während das gezeigte Thermometer 1 in kompakter Bauweise mit integrierter Elektronik 7 ausgeführt ist, kann bei anderen Thermometern 1 die Elektronik 7 auch separat von dem Messeinsatz 3 angeordnet sein. Der Temperatursensor 5 kann beispielsweise ein Widerstandselement oder ein Thermoelement umfassen und je nach Ausgestaltung des Temperatursensors 5 kann die Anzahl der verwendeten Anschlussleitungen 6 variieren. Auch in diesem Falle findet eine unerwünschte Wärmeableitung W an die Umgebung statt, die die Messgenauigkeit des Thermometers 1 beeinträchtigt.

Um den negativen Einfluss der Wärmeableitung zu reduzieren, umfasst ein erfindungsgemäßes Thermometer ein Formstück 8, welches in dem Schutzrohr 3 angeordnet ist und den Messeinsatz 4 zumindest abschnittsweise umgibt. Das Formstück 8 ist also zumindest teilweise zwischen dem Messeinsatz 4 und dem Schutzrohr 3 angeordnet.

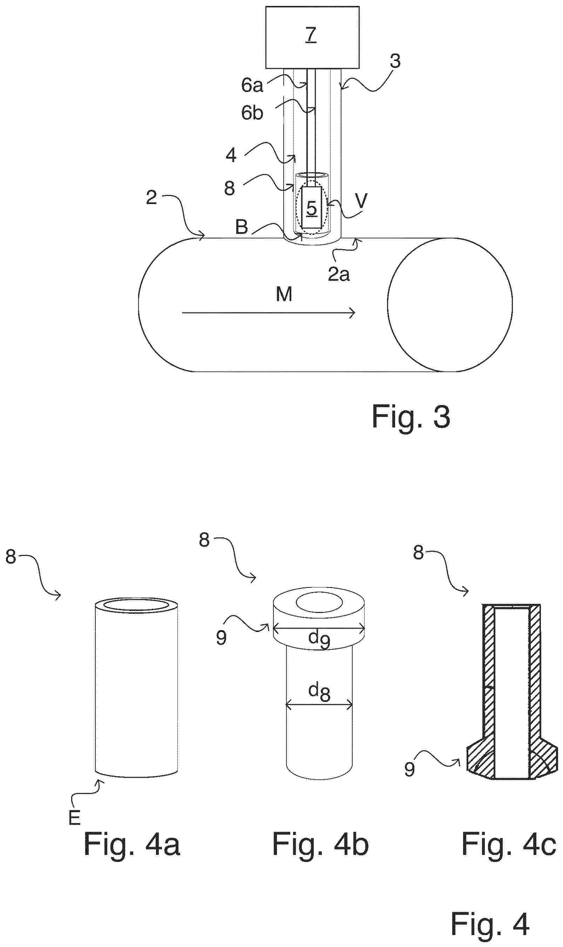

Eine erste Ausgestaltung einer erfindungsgemäßen Vorrichtung 1 mit einem erfindungsgemäßen Formstück ist Gegenstand von Fig. 3. Bei der Vorrichtung handelt es sich um ein nicht-invasives Thermometer 1 ähnlich dem Thermometer 1 aus Fig. 2. Das Formstück 8 ist für diese Ausgestaltung becherförmig ausgestaltet. In einem Abschnitt, welcher für die hier gezeigte Ausgestaltung im Bereich einer Bodenfläche B des Formstücks 8 angeordnet ist, ist das Formstück 8 zwischen dem Messeinsatz 4 und einer Bodenfläche des Schutzrohrs 3 bzw. der Wandung 2a des Behälters angeordnet. Das Formstück 3 dient der, vorzugsweise gleichmäßigen, Erwärmung eines den Temperatursensor 5 umgebenden Volumens V und der Vermeidung unerwünschter Temperaturgradienten im Bereich des Temperatursensors 5 aufgrund von Wärmeableitung an die Umgebung.

In Fig. 4 sind drei mögliche, bevorzugte Ausgestaltungen für ein erfindungsgemäßes Formstück 8 illustriert, welche allesamt und ebenso wie das in Fig. 3 gezeigte Formstück, sowohl für ein invasives als auch für ein nicht-invasives Thermometer verwendet werden können. Das Formstück 8 aus Fig. 4a ist rohförmig ausgestaltet. In der gezeigten Variante weist es eine kreisrunde Querschnittsfläche auf, aber auch andere Querschnittsflächen sind möglich und fallen unter die vorliegende Erfindung. Das Formstück 8 kann in einer weiteren, hier nicht separaten, aber ähnlich zu der in Fig. 3 gezeigten Ausgestaltung, ferner über eine Bodenfläche B verfügen. In dieser Bodenfläche B kann ferner eine Bohrung angeordnet sein, durch welche Bohrung der Messeinsatz führbar ist. Die Bohrung weist dann einen, insbesondere an den Durchmesser des Messeinsatzes 4 angepassten, Durchmesser auf, welcher geringer ist als ein Außendurchmesser des Formstücks 8. Der Außendurchmesser des Formstücks 8 ist wiederum beispielsweise zumindest in dem rohrförmigen Abschnitt an einen Innendurchmesser des Schutzrohrs 3 angepasst. In einem Endbereich E kann die Geometrie des Formstücks 8 ferner an die Geometrie des Messeinsatzes 4 und/oder des Schutzrohrs 3 angepasst sein.

Eine weitere mögliche Ausgestaltung für ein erfindungsgemäßes Formstück 8 ist in Fig. 4b dargestellt. Hier weist das Formstück 8 ebenfalls einen zylindrischen Abschnitt auf. Darüber hinaus umfasst das Formstück 8 ein Endstück 9, dessen Außendurchmesser d₉ größer ist als ein Außendurchmesser d₈ in einem mittleren Bereich des Formstücks 8. Das Endstück 9 ist für die gezeigte Ausgestaltung scheibenförmig ausgestaltet. Hier weist das Endstück 9 weiterhin eine optionale Bohrung auf, durch welche der Messeinsatz 3 führbar ist. Auch das in Fig. 4c dargestellte Formstück 9 weist einen rohrförmigen Abschnitt und ein Endstück 9 auf. Das Endstück 9 ist im Gegensatz zu Fig. 4b allerdings an die Geometrie des Schutzrohrs 3 angepasst, bzw. korrespondierend zu dieser ausgestaltet.

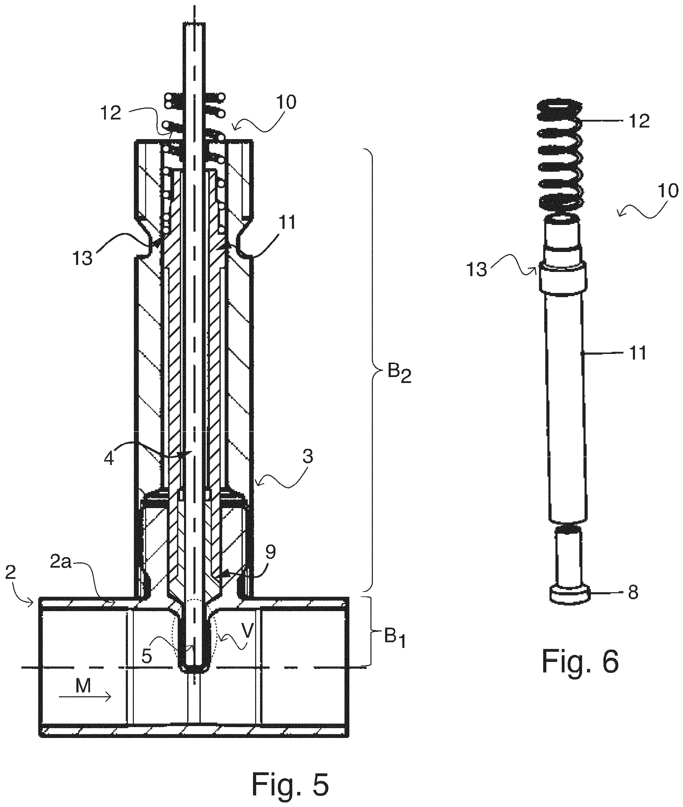

Noch eine beispielhafte Ausgestaltung einer erfindungsgemäßen Vorrichtung 1 ist in Fig. 5 dargestellt. Hier handelt es sich um ein Thermometer 1 zur invasiven Temperaturbestimmung, ähnlich wie dem Thermometer 1 aus Fig. 1. Das Thermometer 1 umfasst ein Formstück 8, welches analog zu dem Formstück 8 aus Fig. 4c aufgebaut ist. Das Formstück 8 ist in dem Schutzrohr 3 angeordnet und umgibt abschnittsweise den Messeinsatz 4. Das Schutzrohr 3 hat einen variablen Innendurchmesser. In einem ersten Bereich B₁ weist es einen geringeren Innendurchmesser auf als in einem zweiten Bereich B₂. Das Endstück 9 des Formstücks 8 ist in einem Übergangsbereich zwischen dem ersten B1 und zweiten Bereich B2 des Schutzrohrs 3 angeordnet und korrespondierend zur Geometrie des Schutzrohrs in dem Übergangsbereich angeordnet. Das Endstück 9 hat damit quasi die Funktion eines Deckels, welcher das den Temperatursensor 5 umgebende Volumen V gegenüber der Umgebung abschließt. Das Formstück 8 dient dazu, Wärme, welche über das Schutzrohr 3 an die Umgebung fließt, zu dem Temperatursensor 5 zu leiten. Auf diese Weise kann eine homogene Temperaturverteilung um den Temperatursensor 5 herum gewährleistet werden und eine unerwünschte Wärmeableitung W an die Prozessumgebung vermieden werden.

Um einen möglichst guten thermischen Kontakt zwischen dem Formstück 9 und dem Schutzrohr 3 bzw. Messeinsatz 4 zu gewährleisten, umfasst die Vorrichtung 1 aus Fig. 5 zusätzlich optional Befestigungsmittel 10. Es sei darauf verwiesen, dass alles hier gezeigten Ausgestaltungen für erfindungsgemäße Thermometer 1 optional über geeignete Befestigungsmittel 10 verfügen können und dass im Rahmen der vorliegenden Erfindung alle dem Fachmann wohlbekannten Befestigungsmittel 10 denkbar sind.

Die Befestigungsmittel aus Fig. 5 umfassen einen zylindrischen Grundkörper 11, welcher zumindest abschnittsweise um das Formstück 8 herum in dem Schutzrohr 3 angeordnet ist und eine Feder 12 zur Ausübung einer vorgebbaren Anpresskraft auf das Formstück. Zur Übertragung der Anpresskraft vermittels der Feder 12 weist der Grundkörper 11 einen Absatz 13 auf, auf welchem die Feder 12 angeordnet ist.

Eine detailliertere Darstellung dieser Anordnung ist nochmal in Fig. 6 zu sehen. Für die hier und in Fig. 5 gezeigte Darstellung dient der Grundköper 11 ferner einer thermischen Isolierung des Formstücks 8 gegenüber der Umgebung. Dazu ist der Grundkörper 11 für die gezeigte Ausgestaltung beispielhaft aus einem wärmeisolierenden Material hergestellt und ist so angeordnet, dass er den zylindrischen Abschnitt des Formstücks umgibt.

### Bezugszeichenliste

- 1: Vorrichtung
- 2: Behältnis; 2a Wandung des Behältnisses
- 3: Schutzrohr
- 4: Messeinsatz
- 5: Temperatursensor
- 6: Anschlussdrähte
- 7: Elektronik
- 8: Formstück
- 9: Endstück
- 10: Befestigungsmittel
- 11: Grundkörper
- 12: Feder
- 13: Absatz im Grundkörper

- M: Medium
- T: Temperatur
- W: Wärmeableitung
- d: Durchmesser
- B₁, B₂: Bereiche
- V: den Temperatursensor umgebendes Volumen
- B: Bodenfläche des Formstücks

## Patentansprüche

1. Vorrichtung (1) zur Bestimmung und/oder Überwachung einer Temperatur (T) eines Mediums (M) in einem Behältnis (2) umfassend:
einen Messeinsatz (4) mit einem Temperatursensor (5) zur Erfassung der Temperatur (T),
ein Schutzrohr (3), in welchem der Temperatursensor (5) angeordnet ist,
ein wärmeleitfähiges Formstück (8), welches in dem Schutzrohr (3) angeordnet ist und den Messeinsatz (4) zumindest abschnittsweise auch in einem dem Medium (M) abzuwendenden Bereich des Temperatursensors umgibt, wobei
das Formstück (8) zumindest abschnittsweise rohrförmig ist und in dem rohrförmigen Abschnitt des Formstücks (8) das Formstück (8) um den Messeinsatz (4) herum in dem Schutzrohr (3) angeordnet ist und sich zwischen dem Messeinsatz (4) und dem Schutzrohr (3) befindet, und Befestigungsmittel (10) zur lösbaren Befestigung des Formstücks (8) in dem Schutzrohr (3) und an dem Messeinsatz (4), wobei
die Befestigungsmittel (10) zumindest einen Grundkörper (11) aus einem wärmeisolierenden Material aufweisen, welcher Grundkörper (11) um das Formstück (10) herum in dem Schutzrohr (3) angeordnet ist.

2. Vorrichtung (1) nach Anspruch 1,
wobei das Formstück (8) aus Kupfer, Silber, Graphit, Bornitrid, einem Stahl, insbesondere Edelstahl, oder einer zumindest eines dieser Materialien aufweisenden Legierung hergestellt ist.

3. Vorrichtung (1) nach Anspruch 1 oder 2,
wobei das Formstück (8) zumindest abschnittsweise zylinderförmig ausgestaltet ist.

4. Vorrichtung (1) nach zumindest einem der vorherigen Ansprüche,
wobei das Formstück (8) becherförmig ausgestaltet ist.

5. Vorrichtung (1) nach Anspruch 4,
wobei eine Bodenfläche (B) des Formstücks (8) eine Bohrung aufweist, durch welche der Messeinsatz (4) führbar ist.

6. Vorrichtung nach Anspruch 5, wobei die Bodenfläche auf einer dem Medium (M) abzuwendenden Seite des Temperatursensors angeordnet ist.

7. Vorrichtung (1) nach zumindest einem der vorherigen Ansprüche,
wobei das Formstück (8) zumindest abschnittsweise eine zu einer Geometrie des Schutzrohres (3) und/oder des Messeinsatzes (4) korrespondierende Geometrie aufweist.

8. Vorrichtung (1) nach zumindest einem der vorherigen Ansprüche,
wobei das Formstück (8) ein Endstück (9) aufweist, dessen Außendurchmesser (d₉) größer ist als ein Außendurchmesser (d₈) des Formstücks (8) in einem mittleren Bereich des Formstücks (8).

9. Vorrichtung (1) nach Anspruch 8,
wobei das Endstück (9) scheibenförmig ausgestaltet ist.

10. Vorrichtung (1) nach Anspruch 8 oder 9,
wobei eine Geometrie des Endstücks (9) zumindest teilweise korrespondierend zu einer Geometrie des Schutzrohres (3) in einem Bereich, in welchen das Formstück (8) einbringbar ist, ausgestaltet ist.

11. Vorrichtung (1) nach zumindest einem der vorherigen Ansprüche,
wobei die Befestigungsmittel (10) derart ausgestaltet und angeordnet sind, dass mittels der Befestigungsmittel (10) eine, insbesondere vorgebbare, Anpresskraft auf das Formstück (8) ausübbar ist.

12. Vorrichtung (1) nach zumindest einem der vorherigen Ansprüche,
wobei der Grundkörper zylindrisch ist.

13. Vorrichtung (1) nach zumindest einem der vorherigen Ansprüche
wobei der Grundkörper (11) aus einem Kunststoff, insbesondere PEEK, PEK, oder PPS gefertigt ist.

14. Vorrichtung (1) nach zumindest einem der vorherigen Ansprüche,
wobei die Befestigungsmittel (10) zumindest eine Feder (12) aufweisen, durch welche Feder (12) die vorgebbare Anpresskraft vermittels des Grundkörpers (11) vermittelbar ist.

15. Vorrichtung (1) nach zumindest einem der vorherigen Ansprüche,
wobei der Temperatursensor (5) zumindest ein Widerstandselement oder ein Thermoelement umfasst.

## Claims

1. A device (1) for determining and/or monitoring a temperature (T) of a medium (M) in a container (2), comprising:
A measuring insert (4) with a temperature sensor (5) for detecting the temperature (T), a protective tube (3), in which the temperature sensor (5) is arranged,
a thermally conductive shaped piece (8), which is arranged in the protective tube (3) and surrounds the measuring insert (4) at least in sections, including in an area of the temperature sensor that is facing away from the medium (M), wherein the shaped piece (8) has the shape of a tube at least in sections and the shaped piece (8) is arranged around the measuring insert (4) in the protective tube (3) in the tube-shaped section of the shaped piece (8) and is located between the measuring insert (4) and the protective tube (3), and mounting materials (10) for mounting the shaped piece (8) in the protective tube (3) and on the measuring insert (4) such that it can be removed again, wherein the mounting materials (10) have at least one basic body (11) made from a heat-insulating material, said basic body (11) being arranged around the shaped piece (10) in the protective tube (3).

2. The device (1) as claimed in claim 1,
wherein the shaped piece (8) is made from copper, silver, graphite, boron nitride, a steel, in particular stainless steel, or an alloy containing at least one of these materials.

3. The device (1) as claimed in claim 1 or 2,
wherein the shaped piece (8) has a cylindrical-shaped design at least in sections.

4. The device (1) as claimed in at least one of the preceding claims, wherein the shaped piece (8) has a cup-shaped design.

5. The device (1) as claimed in claim 4,
wherein a base area (B) of the shaped piece (8) has a hole through which the measuring insert (4) can be guided.

6. The device as claimed in claim 5, wherein the base area is arranged on a side of the temperature sensor that is facing away from the medium (M).

7. The device (1) as claimed in at least one of the preceding claims,
wherein the shaped piece (8) has a geometry corresponding at least in sections to a geometry of the protective tube (3) and/or the measuring insert (4).

8. The device (1) as claimed in at least one of the preceding claims,
wherein the shaped piece (8) has an end piece (9) with an external diameter (d₉) which is larger than an external diameter (d₈) of the shaped piece (8) in a central area of the shaped piece (8).

9. The device (1) as claimed in claim 8,
wherein the end piece (9) is has a disk-shaped design.

10. The device (1) as claimed in claim 8 or 9,
wherein a geometry of the end piece (9) is designed so that it at least partly corresponds to a geometry of the protective tube (3) in an area into which the shaped piece (8) can be inserted.

11. The device (1) as claimed in at least one of the preceding claims,
wherein the mounting materials (10) are configured and arranged in such a way that the mounting materials (10) can be used to exert a contact force, in particular one that is specifiable, onto the shaped piece (8) .

12. The device (1) as claimed in at least one of the preceding claims, wherein the basic body is cylindrical.

13. The device (1) as claimed in at least one of the preceding claims,
wherein the basic body (11) is made from a plastic, in particular PEEK, PEK, or PPS.

14. The device (1) as claimed in at least one of the preceding claims,
wherein the mounting materials (10) at least have a spring (12), said spring (12) being capable of exerting the specifiable contact force by means of the basic body (11).

15. The device (1) as claimed in at least one of the preceding claims,
wherein the temperature sensor (5) comprises at least a resistor element or a thermocouple.

## Revendications

1. Dispositif (1) destiné à la détermination et/ou à la surveillance d'une température d'un produit (M) dans un réservoir (2), lequel dispositif comprend :
un insert de mesure (4) avec un capteur de température (5) destiné à mesurer la température (T),
un doigt de gant (3) dans lequel est disposé le capteur de température (5),
une pièce moulée thermoconductrice (8), laquelle est disposée dans le doigt de gant (3) et laquelle entoure l'insert de mesure (4) au moins par sections également dans une zone du capteur de température détournée du produit (M), la pièce moulée (8) étant tubulaire au moins par sections et, dans la section tubulaire de la pièce moulée (8), la pièce moulée (8) étant disposée autour de l'insert de mesure (4) dans le doigt de gant (3) et se trouvant entre l'insert de mesure (4) et le doigt de gant (3), et
des moyens de fixation (10) destinés à la fixation amovible de la pièce moulée (8) dans le doigt de gant (3) et sur l'insert de mesure (4), les moyens de fixation (10) comprenant au moins un corps de base (11) constitué d'un matériau thermo-isolant, lequel corps de base (11) est disposé autour de la pièce moulée (10) dans le doigt de gant (3).

2. Dispositif (1) selon la revendication 1,
pour lequel la pièce moulée (8) est fabriquée en cuivre, en argent, en graphite, en nitrure de bore, en un acier, notamment un acier inoxydable, ou en un alliage comprenant au moins l'un de ces matériaux.

3. Dispositif (1) selon la revendication 1 ou 2,
pour lequel la pièce moulée (8) est conçue en forme de cylindre au moins par sections.

4. Dispositif (1) selon au moins l'une des revendications précédentes,
pour lequel la pièce moulée (8) est conçue en forme de godet.

5. Dispositif (1) selon la revendication 4,
pour lequel une surface de fond (B) de la pièce moulée (8) présente un alésage à travers lequel l'insert de mesure (4) peut être guidé.

6. Dispositif (1) selon la revendication 5,
pour lequel la surface de fond est disposée sur un côté du capteur de température qui doit être détourné du produit.

7. Dispositif (1) selon au moins l'une des revendications précédentes,
pour lequel la pièce moulée (8) présente au moins par sections une géométrie correspondant à une géométrie du doigt de gant (3) et/ou de l'insert de mesure (4).

8. Dispositif (1) selon au moins l'une des revendications précédentes,
pour lequel la pièce moulée (8) comporte un pièce d'extrémité (9) dont le diamètre extérieur (d₉) est supérieur à un diamètre extérieur (d₈) de la pièce moulée (8) dans une zone centrale de la pièce moulée (8).

9. Dispositif (1) selon la revendication 8,
pour lequel la pièce d'extrémité (9) est conçue en forme de disque.

10. Dispositif (1) selon la revendication 8 ou 9,
pour lequel une géométrie de la pièce d'extrémité (9) est conçue de manière à correspondre au moins partiellement à une géométrie du doigt de gant (3) dans une zone dans laquelle la pièce moulée (8) peut être introduite.

11. Dispositif (1) selon au moins l'une des revendications précédentes,
pour lequel les moyens de fixation (10) sont conçus et disposés de telle sorte qu'une force de pression, notamment prédéfinissable, peut être exercée sur la pièce moulée (8) par l'intermédiaire des moyens de fixation (10).

12. Dispositif (1) selon au moins l'une des revendications précédentes,
pour lequel le corps de base est cylindrique.

13. Dispositif (1) selon au moins l'une des revendications précédentes,
pour lequel le corps de base (11) est fabriqué en une matière plastique, notamment en PEEK, PEK ou PPS.

14. Dispositif (1) selon au moins l'une des revendications précédentes,
pour lequel les moyens de fixation (10) comportent au moins un ressort (12), ressort (12) par lequel la force de pression prédéfinissable peut être transmise au moyen du corps de base (11).

15. Dispositif (1) selon au moins l'une des revendications précédentes,
pour lequel le capteur de température (5) comprend au moins un élément résistif ou un thermocouple.
